# EUROPÄISCHE PATENTSCHRIFT

(11) **EP 3 261 058 B1**
(45) Veröffentlichungstag und Bekanntmachung des Hinweises auf die Patenterteilung: **22.09.2021**
(21) Anmeldenummer: 17175691.9
(22) Anmeldetag: 13.06.2017
(51) Int. Cl.: G07C 3/00, F16P 3/14

(54) **VERFAHREN ZU EINEM BETRIEB EINES SYSTEMS**
METHOD FOR OPERATING A SYSTEM
PROCÉDÉ DE FONCTIONNEMENT D'UN SYSTÈME

(30) Priorität: 22.06.2016 DE 102016211100
(43) Veröffentlichungstag der Anmeldung: 27.12.2017
(73) Patentinhaber: Robert Bosch GmbH, 70442 Stuttgart (DE)
(72) Erfinder: Schadow, Joachim, 70563 Stuttgart (DE); Pogorzelski, Kamil, 70176 Stuttgart (DE); Stock, Joern, 70711 Leinfelden-Echterdingen (DE); Werner, Martin, 72072 Tuebingen (DE); Esenwein, Florian, 70771 Leinfelden-Echterdingen (DE); Bartholomeyczik, Julian, 72762 Reutlingen (DE); Nogueira-Nine, Juan, 70327 Stuttgart (DE); Meier, Janina, 72144 Reutlingen (DE); Poettner, Wolf-Bastian, 70597 Stuttgart (DE)

(56) Entgegenhaltungen:
- EP-A1- 1 533 767
- DE-A1-102014 209 009
- DE-A1-102015 206 608

## Beschreibung

### Stand der Technik

Es ist bereits ein System mit einer Werkzeugmaschine und einer Schutzausrüstung vorgeschlagen worden, wobei die Werkzeugmaschine, insbesondere mittels eines externen Geräts, durch einen Benutzer mit der Schutzausrüstung verbindbar ist.

Dokument DE 10 2015 206608 A1 offenbart ein Sicherheitskleidungsstück mit zumindest einer Sensoreinheit zu einer Erfassung einer bedienerspezifischen Kenngröße und/oder einer umgebungsspezifischen Kenngröße, wobei durch eine Kommunikationseinheit, mittels derer die erfasste bedienerspezifische Kenngröße und/oder die erfasste umgebungsspezifische Kenngröße an ein weiteres Sicherheitskleidungsstück zu einer Kommunikation mit dem weiteren Sicherheitskleidungsstück übermittelbar ist.

### Offenbarung der Erfindung

Die Erfindung geht aus von einem Verfahren zu einem Betrieb eines Systems mit zumindest einem Arbeitsmittel, insbesondere einer tragbaren Werkzeugmaschine, und zumindest zwei Ausrüstungsgegenständen, insbesondere einer persönlichen Schutzausrüstung, eines Benutzers. Die Erfindung wird durch die unabhägigen Ansprüche definiert.

Es wird vorgeschlagen, dass zumindest einer der Ausrüstungsgestände als Datenmaster agiert. Dadurch kann eine vorteilhaft einfache, schnelle und benutzerfreundliche Verbindung zwischen dem zumindest einen Arbeitsmittel und dem zumindest einen Ausrüstungsgegenstand erreicht werden. Zudem kann auf vorteilhaft einfache Weise ein bevorzugt strukturiertes und ganzheitliches Management bei der Herstellung der Verbindung des Arbeitsmittels und der zumindest zwei Ausrüstungsgegenstände erreicht werden.

Das Arbeitsmittel ist vorzugsweise als tragbare Werkzeugmaschine ausgebildet. Unter einer "Werkzeugmaschine" soll insbesondere eine werkstückbearbeitende Maschine, vorteilhaft jedoch eine Bohrmaschine, ein Bohr- und/oder Schlaghammer, eine Säge, ein Hobel, ein Schrauber, eine Fräse, ein Schleifer, ein Winkelschleifer, ein Gartengerät und/oder ein Multifunktionswerkzeug verstanden werden. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 50 kg, bevorzugt kleiner ist als 20 kg und besonders bevorzugt kleiner ist als 10 kg. Es ist jedoch auch denkbar, dass das Arbeitsmittel auf eine andere, einem Fachmann als sinnvoll erscheinende Weise, wie beispielsweise als Fahrzeug, insbesondere als Stapler, Hubwagen und/oder Hebebühne, und/oder als Tablet, Eingabegerät, Computer und/oder Arbeitsplatz, insbesondere als Werkbank und/oder Fertigungsinsel, ausgebildet ist.

Unter einem "Ausrüstungsgegenstand" soll in diesem Zusammenhang insbesondere ein Gegenstand einer Arbeitsausrüstung, insbesondere einer Schutzausrüstung, eines Benutzers verstanden werden. Die Ausrüstungsgegenstände können vorzugsweise als Bestandteil der Schutzausrüstung zum Schutz eines Benutzers bei einem Arbeitseinsatz verstanden werden. Die Ausrüstungsgegenstände sind vorzugsweise von Sicherheitsschuhen, Arbeitshandschuhen, einer Arbeitshose, einer Arbeitsjacke, einem Arbeitsgürtel, einer Schutzbrille, einem Schutzhelm, einem Gehörschutz, einem Schweißerhelm, einem Säureschutzkleidungsstück, einem Hitze- und/oder Feuerschutzkleidungsstück und/oder einem Strahlenschutzanzug gebildet. Der zumindest eine Ausrüstungsgegenstand ist dem Benutzer vorzugsweise fest und eindeutig zugeordnet. In einem verbundenen Zustand erfolgt vorzugsweise intervallweise, insbesondere regelmäßig, ein Austausch von elektronischen Daten automatisch zwischen dem zumindest einen Arbeitsmittel und dem zumindest einen Ausrüstungsgegenstand. Dadurch kann vorzugsweise ein Abgleich von Informationen, insbesondere Umgebungsinformationen, Netzwerkinformationen, Regeln, Zuständen, Sensordaten, Arbeitsmittelparameter, wie eine Betriebsbereitschaft und/oder einem Akkustand, eine Abfrage und/oder Überprüfung der Benutzeridentifikationskenngröße und/oder Benutzerinformationen, erreicht werden.

Unter einem "Datenmaster" soll in diesem Zusammenhang insbesondere eine, insbesondere elektronische, Einheit verstanden werden, die zu einer Speicherung und digitalen Gruppierung von, insbesondere elektronischen, Daten von zumindest zwei Ausrüstungsgegenständen vorgesehen ist, wobei vorzugsweise die Daten des zumindest einen Ausrüstungsgegenstands, insbesondere von dem zumindest einen Arbeitsmittel, abrufbar sind. Die Daten des zumindest einen weiteren Ausrüstungsgegenstands sind vorzugsweise als Verbindungsdaten zu einer, insbesondere selbsttätigen, Herstellung einer Verbindung zwischen dem zumindest einen Arbeitsmittel und dem zumindest einen Ausrüstungsgegenstand gebildet. Der Datenmaster ist vorzugsweise zu einer Speicherung und digitalen Gruppierung von zumindest zwei, insbesondere von dem als Datenmaster agierenden Ausrüstungsgegenstand verschiedenen, Ausrüstungsgegenständen vorgesehen. Die Verbindungsdaten umfassen vorzugsweise Informationen, die zu einer Herstellung der Verbindung zwischen dem zumindest einen Arbeitsmittel und dem zumindest einen weiteren Ausrüstungsgegenstand benötigt werden. Die Verbindungsdaten umfassen vorzugsweise eine Benutzeridentifikationskenngröße, insbesondere eine Benutzer-ID, einen elektronischen Schlüssel zur Verschlüsselung und/oder Entschlüsselung einer Kommunikation zwischen dem zumindest einen Arbeitsmittel und zumindest einem der Ausrüstungsgegenstände in einem verbundenen Zustand und/oder andere, einem Fachmann als sinnvoll erscheinende Informationen. Der Ausrüstungsgegenstand agiert vorzugsweise automatisch und/oder selbsttätig als Datenmaster, d.h. ohne Eingriff durch einen Benutzer.

Vorzugsweise ist die Anzahl der Ausrüstungsgegenstände, die als Datenmaster agieren, kleiner als eine Gesamtzahl einer vorliegenden Gruppe von Ausrüstungsgegenständen. Besonders bevorzugt ist nur ein Ausrüstungsgegenstand dazu vorgesehen, als Datenmaster zu agieren. Jedoch ist auch denkbar, dass die Verbindungsinformationen aller zu der persönlichen Schutzausrüstung des Benutzers gehörenden Ausrüstungsgegenstände jeweils in jedem der Ausrüstungsgegenstände gespeichert sind, sodass alle Ausrüstungsgegenstände als Datenmaster agieren könnten, wobei jedoch der Ausrüstungsgegenstand, welcher zuerst mit dem zumindest einen Arbeitsmittel eine Verbindung zur Übertragung der Verbindungsdaten herstellt, tatsächlich als Datenmaster agiert.

Zudem wird vorgeschlagen, dass das Verfahren zumindest einen Verfahrensschritt umfasst, in dem Verbindungsdaten der zumindest zwei Ausrüstungsgegenstände vor einer Verbindung mit dem zumindest einen Arbeitsmittel digital gruppiert werden. Dadurch kann eine vorteilhaft einfache, schnelle und benutzerfreundliche Verbindung zwischen dem zumindest einen Arbeitsmittel und dem zumindest einen Ausrüstungsgegenstand erreicht werden. Unter "digital gruppieren" soll in diesem Zusammenhang insbesondere ein digitales Zusammenfassen der Verbindungsdaten der zumindest zwei Ausrüstungsgegenstände verstanden werden, wobei die zumindest zwei Ausrüstungsgegenstände zumindest teilweise gemeinsam als eine Gruppe und/oder Familie benutzbar und/oder betreibbar sind. Vorzugsweise wird in dem Verfahrensschritt eine Vielzahl von, insbesondere unterschiedlichen, Ausrüstungsgegenständen digital gruppiert. Vorzugsweise können die digital gruppierten Ausrüstungsgegenstände, insbesondere eine Software der digital gruppierten Ausrüstungsgegenstände, zumindest teilweise aufeinander abgestimmt werden. Die digitale Gruppierung der Verbindungsdaten ist vorzugsweise abgeschlossen, bevor eine Herstellung der Verbindung zwischen dem zumindest einen Arbeitsmittel und den zumindest zwei Ausrüstungsgegenständen erfolgt. Unter der Formulierung "vor einer Verbindung mit dem zumindest einen Arbeitsmittel" soll in diesem Zusammenhang insbesondere verstanden werden, dass die Verbindungsdaten der zumindest zwei Ausrüstungsgegenstände im Datenmaster zusammengefasst werden, bevor das zumindest eine Arbeitsmittel mit zumindest einem, von dem Datenmaster verschieden ausgebildeten Ausrüstungsgegenstand verbunden wird.

Ferner wird vorgeschlagen, dass das Verfahren zumindest einen Verfahrensschritt umfasst, in dem die gruppierten Verbindungsdaten der zumindest zwei Ausrüstungsgegenstände zu einer Herstellung einer Verbindung zwischen dem zumindest einen Arbeitsmittel und zumindest einem der Ausrüstungsgegenstände abgerufen werden. Dadurch kann eine vorteilhaft einfache und bevorzugt benutzerfreundliche Herstellung der Verbindung zwischen dem zumindest einen Arbeitsmittel und dem zumindest einen Ausrüstungsgegenstand erreicht werden. Zudem können benutzerspezifische Informationen anhand der abgerufenen gruppierten Verbindungsdaten bei der Herstellung der Verbindung zwischen dem zumindest einen Arbeitsmittel und den zumindest zwei Ausrüstungsgegenständen auf bevorzugt einfache Weise berücksichtigt werden. Unter "abrufen" soll in diesem Zusammenhang insbesondere verstanden werden, dass die gruppierten Verbindungsdaten elektronisch angefordert, ausgelesen und ausgewertet werden. Vorzugsweise werden die gruppierten Verbindungsdaten von dem zumindest einen Arbeitsmittel und/oder von dem zumindest einen Ausrüstungsgegenstand, insbesondere automatisch und selbsttätig, abgerufen. Die Verbindung zwischen dem zumindest einen Arbeitsmittel und dem zumindest einen Ausrüstungsgegenstand ist vorzugsweise als drahtlose Verbindung ausgebildet. Das Arbeitsmittel und der Ausrüstungsgegenstand sind besonders bevorzugt über eine Verbindung via Bluetooth, Infrarot, Funk, WLAN und/oder auf eine andere, einem Fachmann als sinnvoll erscheinende Weise verbunden. Die Verbindung zwischen dem zumindest einen Arbeitsmittel und dem zumindest einen Ausrüstungsgegenstand ist vorzugsweise mittels eines drahtlosen Device Discovery Mechanismus herstellbar. Vorzugsweise ist die Verbindung bidirektional ausgebildet. Die Verbindung wird vorzugsweise zu allen Ausrüstungsgegenständen der Schutzausrüstung, die dem Benutzer zugeordnet sind, hergestellt.

Des Weiteren wird vorgeschlagen, dass das Verfahren zumindest einen Verfahrensschritt umfasst, in dem die digital gruppierten Verbindungsdaten der zumindest zwei Ausrüstungsgegenstände in eine Speichereinheit eines Ausrüstungsgegenstands gespeichert werden. Dadurch können die digital gruppierten Verbindungsdaten auf eine bevorzugt einfache Weise zur Verfügung gestellt werden. Unter einer "Speichereinheit" soll in diesem Zusammenhang insbesondere eine Einheit verstanden werden, die dazu vorgesehen ist, zumindest eine Information, insbesondere in Form von elektronischen Daten, vorteilhaft von einer Stromversorgung unabhängig, zu speichern. Der Ausrüstungsgegenstand bildet einen Datenmaster, der die digital gruppierten Verbindungsinformationen zur Verbindung mit den zumindest zwei Ausrüstungsgegenständen bereitstellt. Vorzugsweise ist der Ausrüstungsgegenstand, in dessen Speichereinheit die digital gruppierten Verbindungsdaten gespeichert sind, insbesondere manuell durch den Benutzer, mit dem Arbeitsmittel, beispielsweise mittels einer Bedieneinheit, einer Identifikation des Benutzers und/oder einer Benutzer-ID, eines Pairingverfahrens und/oder auf eine andere, einem Fachmann als sinnvoll erscheinende Weise, verbindbar. Alternativ ist es auch denkbar, dass ein Datenmaster vorgesehen ist, in dem die digital gruppierten Verbindungsdaten gespeichert sind und der als Cloud, Datenbank, Netzwerkserver, Mobilgerät, insbesondere Smartphone und/oder auf eine andere, einem Fachmann als sinnvoll erscheinende Weise ausgebildet ist.

Zudem wird vorgeschlagen, dass das Verfahren zumindest einen Verfahrensschritt umfasst, in dem die digital gruppierten Verbindungsdaten automatisch aktualisiert werden. Dadurch kann ein vorteilhaft hoher Benutzerkomfort erreicht werden. Vorzugsweise werden die digital gruppierten Verbindungsdaten in einem unbenutzten und in einer Aufbewahrungsvorrichtung gelagerten Zustand des Ausrüstungsgegenstands, in dessen Speichereinheit die digital gruppierten Verbindungsdaten gespeichert sind, aktualisiert. Besonders bevorzugt werden die digital gruppierten Verbindungsdaten intervallweise, beispielsweise wöchentlich oder täglich, und/oder bedarfsabhängig automatisch aktualisiert.

Ferner wird vorgeschlagen, dass das Verfahren zumindest einen Verfahrensschritt umfasst, in dem eine Verbindung zum Austausch elektronischer Daten zwischen dem zumindest einen Arbeitsmittel und zumindest einem der Ausrüstungsgegenstände in Abhängigkeit von den digital gruppierten Verbindungsdaten selbsttätig hergestellt wird. Dadurch kann eine vorteilhaft einfache und bevorzugt benutzerfreundliche Herstellung der Verbindung zwischen dem zumindest einen Arbeitsmittel und dem zumindest einen Ausrüstungsgegenstand erreicht werden. Unter "selbsttätig" soll in diesem Zusammenhang von einem aktiven Eingreifen des Benutzers unabhängig verstanden werden. Die Verbindung wird vorzugsweise automatisch hergestellt.

Des Weiteren wird vorgeschlagen, dass die Verbindung zwischen dem zumindest einen Arbeitsmittel und dem zumindest einen Ausrüstungsgegenstand in dem zumindest einen Verfahrensschritt in Abhängigkeit von den digital gruppierten Verbindungsdaten verschlüsselt wird. Dadurch kann ein vorteilhaft zuverlässiger Schutz der Verbindung gegenüber einem Eingreifen Dritter in die Verbindung erreicht werden. Insbesondere bei einer Herstellung der Verbindung mittels des Challenge-Response-Verfahrens in Abhängigkeit von der Benutzeridentifikationskenngröße kann auf vorteilhaft einfache Weise eine elektronische Verschlüsselung der Verbindung erreicht werden.

Zudem wird vorgeschlagen, dass die Verbindungsdaten der zumindest zwei Ausrüstungsgegenstände in Abhängigkeit von einem Arbeitsauftrag digital gruppiert werden. Dadurch können eine vorteilhafte Optimierung und eine bevorzugt gute Vorbereitung einer Ausführung des Arbeitsauftrags erreicht werden. Vorzugsweise werden anhand des Arbeitsauftrags für den Benutzer zumindest zwei, vorzugsweise alle zur Ausführung des Arbeitsauftrags benötigten Ausrüstungsgegenstände zusammengestellt und digital gruppiert. Der Arbeitsauftrag umfasst vorzugsweise Informationen zu einem Einsatzort, einer Tätigkeit, dafür benötigten Zubehör- und/oder Ausrüstungsgegenständen und/oder andere, einem Fachmann als sinnvoll erscheinende Informationen. Nach einer Herstellung der Verbindung zwischen dem Arbeitsmittel und des Ausrüstungsgegenständen kann anhand der digitalen Gruppierung eine Vollständigkeit der Ausrüstungsgegenstände der persönlichen Schutzausrüstung überprüft werden. Das Ergebnis der Überprüfung der Vollständigkeit kann an den Benutzer, insbesondere mittels einer roten und einer grünen LED am Arbeitsmittel, ausgegeben werden.

Ferner wird vorgeschlagen, dass die Verbindungsdaten der zumindest zwei Ausrüstungsgegenstände in Abhängigkeit von einer Kenngröße des zumindest einen Arbeitsmittels digital gruppiert werden. Dadurch können ein vorteilhaft hoher Arbeitskomfort für den Benutzer und ein bevorzugt gutes Arbeitsergebnis erreicht werden. Die Kenngröße des zumindest einen Arbeitsmittels ist vorzugsweise als Klasse, zu der das zumindest eine Arbeitsmittel gehört, als Leistung des zumindest einen Arbeitsmittels und/oder besondere Schutz- und/oder Sicherheitsbestimmungen des zumindest einen Arbeitsmittels und/oder auf eine andere, einem Fachmann als sinnvoll erscheinende Weise ausgebildet. In Abhängigkeit von der Kenngröße des zumindest einen Arbeitsmittels kann vorzugsweise festgelegt werden, welche Ausrüstungsgegenstände der persönlichen Schutzausrüstung des Benutzers für eine Benutzung des zumindest einen Arbeitsmittels notwendig sind.

Des Weiteren wird vorgeschlagen, dass die Verbindungsdaten der zumindest zwei Ausrüstungsgegenstände in Abhängigkeit von einer Benutzerkenngröße digital gruppiert werden. Dadurch können ein bevorzugt hoher Benutzerkomfort und eine vorteilhaft gute Anpassung an Benutzererfordernisse und/oder - vorlieben erreicht werden. Die Benutzerkenngröße ist vorzugsweise als Qualifikation, Berechtigung, Ausbildungsstand, physischer Zustand des Benutzers und/oder auf eine andere, einem Fachmann als sinnvoll erscheinende Weise ausgebildet.

Zudem geht die Erfindung aus von einem System zur Durchführung des Verfahrens mit zumindest einem Arbeitsmittel, insbesondere einer tragbaren Werkzeugmaschine, und mit zumindest einem Ausrüstungsgegenstand, insbesondere einer persönlichen Schutzausrüstung, eines Benutzers.

Es wird vorgeschlagen, dass das System zumindest eine Elektronikvorrichtung zumindest zu einer digitalen Gruppierung von Verbindungsdaten der zumindest zwei Ausrüstungsgegenstände vor einer Verbindung zwischen dem zumindest einen Arbeitsmittel und zumindest einem der zumindest zwei Ausrüstungsgegenstände umfasst.

Das erfindungsgemäße Verfahren und/oder das erfindungsgemäße System sollen hierbei nicht auf die oben beschriebene Anwendung und Ausführungsform beschränkt sein. Insbesondere können das erfindungsgemäße Verfahren und/oder das erfindungsgemäße System zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind mehrere Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ablaufdiagramm eines erfindungsgemäßen Verfahrens zum Betrieb eines Systems,
- Fig. 2: ein Ablaufdiagramm eines alternativ ausgebildeten Verfahrens zum Betrieb eines Systems,
- Fig. 3: das System zur Durchführung des Verfahrens in einer schematischen Darstellung,
- Fig. 4: ein Arbeitsmittel des Systems in einer schematischen Darstellung und
- Fig. 5: einen Ausrüstungsgegenstand des Systems in einer schematischen Darstellung.

### Beschreibung der Ausführungsbeispiele

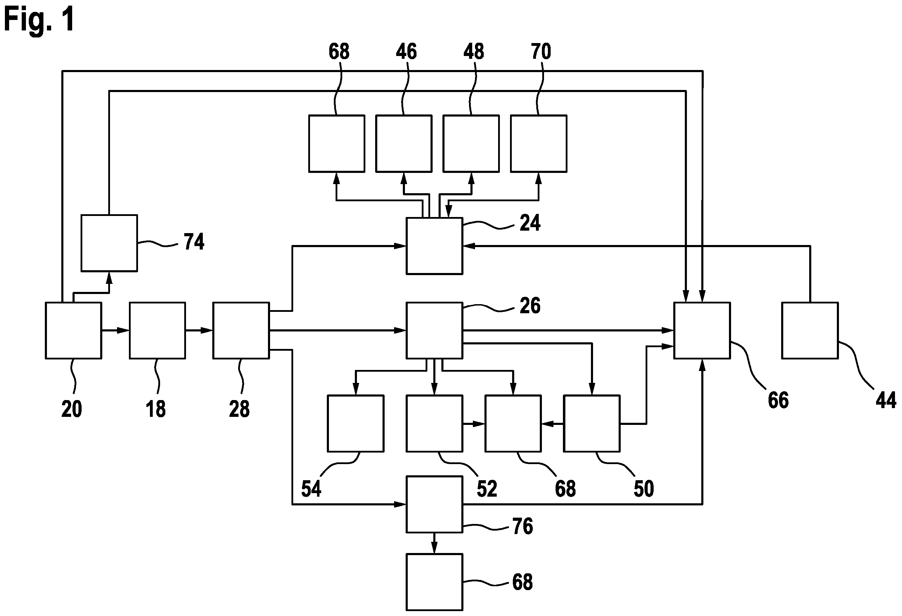

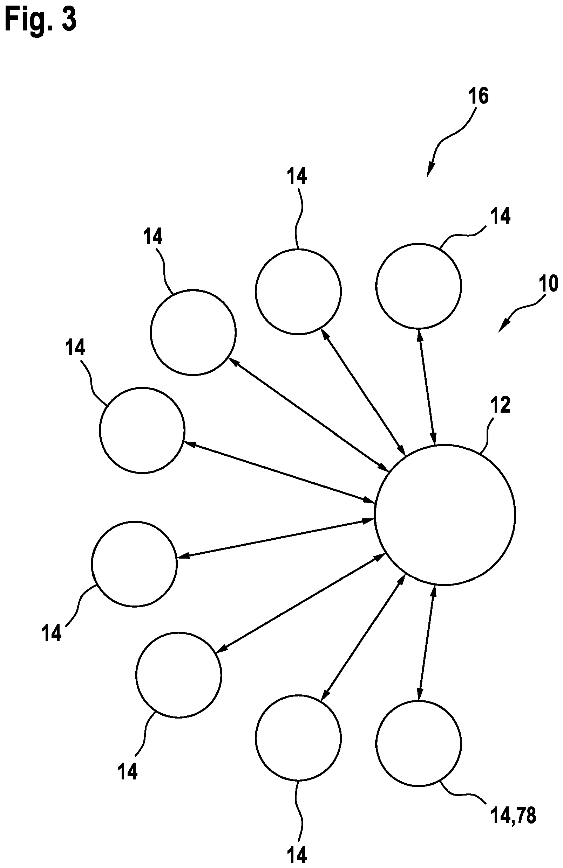

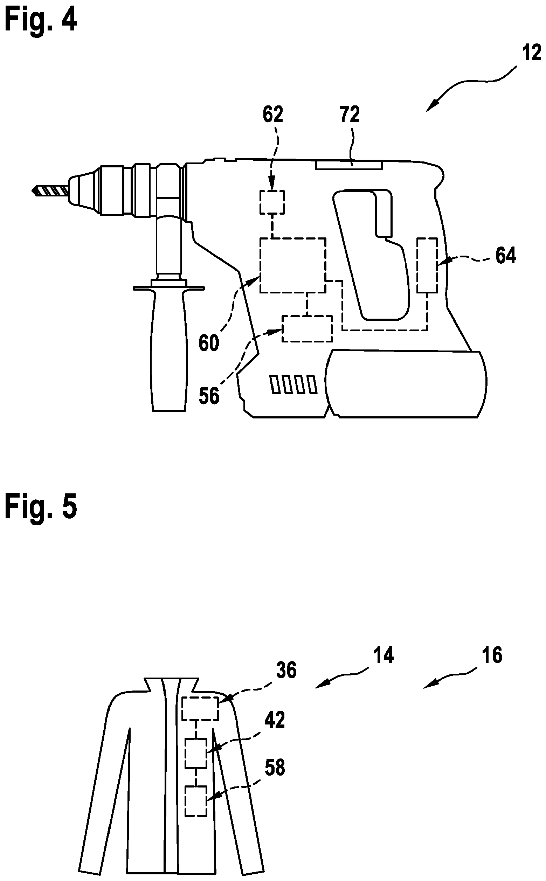

In Figur 1 ist ein Ablaufdiagramm eines Verfahrens zum Betrieb eines Systems 10 dargestellt. Das System 10 zur Durchführung des Verfahrens ist in Figur 3 gezeigt und umfasst zumindest ein Arbeitsmittel 12 und zumindest einen Ausrüstungsgegenstand 14 eines Benutzers. Das System 10 umfasst genau ein Arbeitsmittel 12. Es ist jedoch auch denkbar, dass das System 10 mehrere, einem Fachmann als sinnvoll erscheinende Arbeitsmittel 12 umfasst. Das System 10 umfasst eine Vielzahl von Ausrüstungsgegenständen 14 eines Benutzers. Es ist jedoch auch denkbar, dass das System 10 nur einen einzigen Ausrüstungsgegenstand 14 umfasst. Das Arbeitsmittel 12 ist als tragbare Werkzeugmaschine ausgebildet. Das Arbeitsmittel 12 ist als Bohrhammer ausgebildet (Fig. 4). Es sind jedoch auch andere, einem Fachmann als sinnvoll erscheinende Ausgestaltungen des Arbeitsmittels 12, wie beispielsweise als Fahrzeug, insbesondere als Stapler, Hubwagen oder Hebebühne, oder als Tablet, Eingabegerät, Computer oder Arbeitsplatz, insbesondere als Werkbank oder Fertigungsinsel, denkbar. Das Arbeitsmittel 12 des Systems 10 ist austauschbar ausgebildet. Der Benutzer kann in Abhängigkeit einer Anwendung das als Bohrhammer ausgebildete Arbeitsmittel 12 durch ein alternativ, beispielsweise als Winkelschleifer, ausgestaltetes Arbeitsmittel austauschen. Das Arbeitsmittel 12 umfasst eine Kommunikationsvorrichtung 56 zu einer Kommunikation mit jeweils einer Kommunikationsvorrichtung 58 der Ausrüstungsgegenstände 14 zur Übertragung elektronischer Daten in einem verbundenen Zustand. Die Kommunikationsvorrichtung 56 des Arbeitsmittels 12 ist zu einer drahtlosen Kommunikation vorgesehen. Die Kommunikationsvorrichtung 56 des Arbeitsmittels 12 ist jeweils zu einer Kommunikation mittels Bluetooth vorgesehen. Das Arbeitsmittel 12 umfasst zudem eine Elektronikvorrichtung 60. Die Elektronikvorrichtung 60 ist zur Verarbeitung elektronischer Daten vorgesehen. Die Elektronikvorrichtung 60 umfasst einen Mikroprozessor (CPU). Es sind jedoch auch andere, einem Fachmann als sinnvoll erscheinende Ausgestaltungen der Elektronikvorrichtung 60, wie beispielsweise als ein Ein-Chip-System (SoC), denkbar.

Die Ausrüstungsgegenstände 14 des Systems 10 sind Bestandteil einer persönlichen Schutzausrüstung 16 des Benutzers. Die Ausrüstungsgegenstände 14 sind als Arbeitsjacke, Arbeitshose, Sicherheitsschuhe, Helm, Schutzbrille, Gehörschutz und Handschuhe ausgebildet. Es sind, alternativ oder zusätzlich, jedoch auch andere, einem Fachmann als sinnvoll erscheinende Ausgestaltungen der Ausrüstungsgegenstände 14 denkbar. Der beispielhaft in Figur 5 dargestellte Ausrüstungsgegenstand ist als Arbeitsjacke ausgebildet. Die Ausrüstungsgegenstände 14 umfassen jeweils die Kommunikationsvorrichtung 58 zu einer Kommunikation mit der Kommunikationsvorrichtung 56 des Arbeitsmittels 12 zur Übertragung elektronischer Daten in einem verbundenen Zustand. Die Kommunikationsvorrichtung 58 der Ausrüstungsgegenstände 14 ist jeweils zu einer drahtlosen Kommunikation vorgesehen. Die Kommunikationsvorrichtung 58 der Ausrüstungsgegenstände 14 ist jeweils zu einer Kommunikation mittels Bluetooth vorgesehen. Die Ausrüstungsgegenstände 14 umfassen zudem jeweils eine Elektronikvorrichtung 42. Die Elektronikvorrichtung 42 ist zur Verarbeitung elektronischer Daten vorgesehen. Die Elektronikvorrichtung 42 umfasst einen Mikroprozessor (CPU). Es sind jedoch auch andere, einem Fachmann als sinnvoll erscheinende Ausgestaltungen der Elektronikvorrichtung 42, wie beispielsweise als ein Ein-Chip-System (SoC), denkbar.

Die Ausrüstungsgegenstände 14 sind dem Benutzer eindeutig zugeordnet. Die Ausrüstungsgegenstände 14 weisen jeweils eine Speichereinheit 36 auf, die zumindest eine Benutzeridentifikationskenngröße zur eindeutigen Identifikation des Benutzers speichert. Die Speichereinheit 36 ist zur nicht-flüchtigen Speicherung der zumindest einen Benutzeridentifikationskenngröße vorgesehen. Die Benutzeridentifikationskenngröße ist von einer Personalnummer des Benutzers gebildet. Es sind jedoch auch andere, einem Fachmann als sinnvoll erscheinende Ausgestaltungen der Benutzeridentifikationskenngröße, wie beispielsweise als Benutzer-ID oder Name, denkbar. Die Benutzeridentifikationskenngröße ist jeweils fest in den Ausrüstungsgegenständen 14 hinterlegt und bedarfsabhängig abrufbar. Es ist jedoch auch denkbar, dass die Benutzeridentifikationskenngröße in den Ausrüstungsgegenständen 14 jeweils temporär hinterlegt ist. Die Speichereinheit 36 umfasst ein elektronisches Speicherelement zur Speicherung der Benutzeridentifikationskenngröße. Das elektronische Speicherelement ist als RFID-Element ausgebildet. Es sind jedoch auch andere, einem Fachmann als sinnvoll erscheinende Ausgestaltungen des Speicherelements, wie beispielsweise als Barcode, QR-Code oder Mikrochip, denkbar.

Die Benutzeridentifikationskenngröße ist ebenfalls in dem Arbeitsmittel 12 hinterlegbar. Das Arbeitsmittel 12 weist ein Speicherelement 62 zur Speicherung der Benutzeridentifikationskenngröße auf. Das Speicherelement 62 des Arbeitsmittels 12 ist zur temporären Speicherung der Benutzeridentifikationskenngröße vorgesehen. Es ist jedoch auch denkbar, dass die Benutzeridentifikationskenngröße in dem Arbeitsmittel 12 fest hinterlegt ist.

Die Ausrüstungsgegenstände 14 und das Arbeitsmittel 12 des Systems 10 sind miteinander verbindbar. Eine Verbindung zwischen dem Arbeitsmittel 12 und den Ausrüstungsgegenständen 14 ist zu einem Austausch elektronischer Daten vorgesehen. Die Verbindung zwischen dem Arbeitsmittel 12 und den Ausrüstungsgegenständen 14 ist drahtlos ausgebildet. Die Verbindung zum Austausch elektronischer Daten zwischen dem Arbeitsmittel 12 und den Ausrüstungsgegenständen 14 ist in Abhängigkeit von der Benutzeridentifikationskenngröße selbsttätig herstellbar. Das Verfahren zum Herstellen der Verbindung zwischen dem Arbeitsmittel 12 und den Ausrüstungsgegenständen 14 und zum Betrieb des Systems 10 ist im Folgenden näher beschrieben.

Das Verfahren (Figur 1) umfasst zumindest einen Verfahrensschritt 20, in dem eine Benutzeridentität erfasst und zur selbsttätigen Verbindung zwischen dem Arbeitsmittel 12 und den Ausrüstungsgegenständen 14 ausgewertet wird. Die Benutzeridentität wird in dem Verfahrensschritt 20 mittels einer Erfassungseinheit 64 des Arbeitsmittels 12 erfasst und temporär gespeichert. Die Benutzeridentität wird ausgewertet und der Benutzeridentifikationskenngröße zugeordnet. Die Benutzeridentität wird in dem Verfahrensschritt 20 biometrisch erfasst. Die Benutzeridentität wird in dem Verfahrensschritt 20 über einen Fingerabdruck des Benutzers erfasst. Die Erfassungseinheit 64 umfasst ein Fingerprint-Element zur Erfassung der Benutzeridentität über den Fingerabdruck des Benutzers. Das Fingerprint-Element zur Erfassung der Benutzeridentität ist in einem Griffbereich des Arbeitsmittels 12 angeordnet, sodass ein Fingerabdruck des Benutzers bei einer korrekten Position einer Hand zum Führen des Arbeitsgeräts 12 bei einer Bearbeitung automatisch erfasst wird. Es sind jedoch auch andere, einem Fachmann als sinnvoll erscheinende Ausgestaltungen der Erfassung der Benutzeridentität, beispielsweise mittels eines Irisscans, einer Gesichtserkennung, einer Stimmenerkennung, eines RFID-Elements, eines Barcodes oder eines QR-Codes, denkbar.

Das Verfahren umfasst zumindest einen Verfahrensschritt 18, in dem die Verbindung zum Austausch elektronischer Daten zwischen dem Arbeitsmittel 12 und den Ausrüstungsgegenständen 14 in Abhängigkeit von der Benutzeridentifikationskenngröße, die in dem Arbeitsmittel 12 und/oder in den Ausrüstungsgegenständen 14 hinterlegt ist, selbsttätig hergestellt wird. Die Benutzeridentifikationskenngröße ist in dem Arbeitsmittel 12 temporär und in den Ausrüstungsgegenständen 14 fest hinterlegt. Das Verfahren umfasst genau einen Verfahrensschritt 18, in dem die Verbindung zwischen dem Arbeitsmittel 12 und den Ausrüstungsgegenständen 14 selbsttätig hergestellt wird. Es ist jedoch auch denkbar, dass das Verfahren mehrere, einem Fachmann als sinnvoll erscheinende Verfahrensschritte 18 zur Herstellung der Verbindung zwischen dem Arbeitsmittel 12 und den Ausrüstungsgegenständen 14 umfasst. In dem Verfahrensschritt 18 wird eine drahtlose Verbindung zwischen dem Arbeitsmittel 12 und den Ausrüstungsgegenständen 14 hergestellt. Die Verbindung wird mittels der Kommunikationsvorrichtung 58 der Ausrüstungsgegenstände 14 und der Kommunikationsvorrichtung 56 des Arbeitsmittels 12 hergestellt.

Nach der Erfassung und Auswertung der Benutzeridentität durch die Erfassungseinheit 64 des Arbeitsmittels 12 sucht die Kommunikationseinheit 56 des Arbeitsmittels 12 nach Ausrüstungsgegenständen 14 in einer Umgebung des Arbeitsmittels 12. Die Kommunikationseinheit 56 des Arbeitsmittels 12 sucht in einem Umkreis von 10 m Radius um das Arbeitsmittel 12 herum nach Ausrüstungsgegenständen 14. Es sind jedoch auch andere, einem Fachmann als sinnvoll erscheinende Werte des Radius denkbar. Anschließend fragt die Kommunikationsvorrichtung 56 die Benutzeridentifikationskenngröße eines gefundenen Ausrüstungsgegenstands 14 ab. Bei einer Übereinstimmung der in dem Arbeitsmittel 12 hinterlegten Benutzeridentifikationskenngröße und der in dem Ausrüstungsgegenstand 14 hinterlegten Benutzeridentifikationskenngröße wird in dem Verfahrensschritt 18 die Verbindung zwischen dem Arbeitsmittel 12 und dem Ausrüstungsgegenstand 14 hergestellt. Das Arbeitsmittel 12 erfasst die Benutzeridentität und speichert die dazu gehörende Benutzeridentifikationskenngröße temporär und sucht anschließend nach Ausrüstungsgegenständen 14, die sich in der Umgebung befinden und in denen dieselbe Benutzeridentifikationskenngröße fest hinterlegt ist.

Die Verbindung zwischen dem Arbeitsmittel 12 und dem Ausrüstungsgegenstand 14 wird in dem Verfahrensschritt 18 mittels eines Challenge-Response-Verfahrens in Abhängigkeit von der Benutzeridentifikationskenngröße hergestellt. Alternativ ist es auch denkbar, dass die Verbindung zwischen dem Arbeitsmittel 12 und dem Ausrüstungsgegenstand 14 in dem Verfahrensschritt 18 mittels eines Abgleichs der Benutzeridentifikationskenngröße oder auf eine andere, einem Fachmann als sinnvoll erscheinende Weise hergestellt wird. Die Verbindung zwischen dem Arbeitsmittel 12 und dem Ausrüstungsgegenstand 14 wird automatisch, ohne ein aktives Eingreifen des Benutzers hergestellt. In dem Verfahrensschritt 18 wird die Verbindung zwischen dem Arbeitsmittel 12 und allen Ausrüstungsgegenständen 14 der persönlichen Schutzausrüstung 16 des Benutzers hergestellt. Die Verbindung zwischen dem Arbeitsmittel 12 und dem Ausrüstungsgegenstand 14 ist bidirektional ausgebildet. In dem Verfahrensschritt 18 wird eine verschlüsselte Verbindung zwischen dem Arbeitsmittel 12 und dem Ausrüstungsgegenstand 14 hergestellt.

Wechselt der Benutzer, dem die Ausrüstungsgegenstände 14 zugeordnet sind, das Arbeitsmittel 12 und identifiziert sich an einem anderen Arbeitsmittel, wird die bestehende Verbindung zwischen dem bisherigen Arbeitsmittel 12 und den Ausrüstungsgegenständen 14 automatisch getrennt und eine Verbindung zwischen dem anderen Arbeitsmittel und den Ausrüstungsgegenständen 14 wird gemäß dem Verfahrensschritt 18 automatisch hergestellt. Dadurch kann ein einfacher, schneller und unkomplizierter Wechsel des Arbeitsmittels 12 für den Benutzer erreicht werden.

Das Verfahren weist zumindest einen Verfahrensschritt 28 auf, in dem Verbindungsdaten der Verbindung zwischen dem Arbeitsmittel 12 und den Ausrüstungsgegenständen 14 gespeichert werden. Das Verfahren weist genau einen Verfahrensschritt 28 zur Speicherung der Verbindungsdaten auf. Es ist jedoch auch denkbar, dass die Speicherung der Verbindungsdaten auf mehrere, einem Fachmann als sinnvoll erscheinende Verfahrensschritte 28 aufgeteilt wird. Die Verbindungsdaten, die in dem Verfahrensschritt 28 gespeichert werden, können bei einer erneuten Verbindung zwischen dem Arbeitsmittel 12 und den Ausrüstungsgegenständen 14 abgerufen werden, um die erneute Verbindung schneller herstellen zu können.

Das Verfahren weist zumindest einen Verfahrensschritt 24 auf, in dem eine benutzerspezifische Gesamtbearbeitungszeit zu einer Freischaltung des Arbeitsmittels 12 ausgewertet wird. Das Verfahren weist genau einen Verfahrensschritt 24 auf, in dem die benutzerspezifische Gesamtbearbeitungszeit zur Freischaltung des Arbeitsmittels 12, in dem die Benutzeridentifikationskenngröße hinterlegt ist und das mit den Ausrüstungsgegenständen 14 verbunden ist, ausgewertet wird. Es ist jedoch auch denkbar, dass das Verfahren mehrere, einem Fachmann als sinnvoll erscheinende Verfahrensschritte 24 zur Auswertung der benutzerspezifischen Gesamtbearbeitungszeit umfasst. Die benutzerspezifische Gesamtbearbeitungszeit setzt sich aus einer Arbeitszeit des Benutzers, in der der Benutzer mit einem Arbeitsmittel 12 oder mit unterschiedlichen Arbeitsmitteln, die vorzugsweise einer gemeinsamen Klasse angehören, arbeitet, zusammen. Die Arbeitszeit des Benutzers mit dem Arbeitsmittel 12 wird in einem Verfahrensschritt 44 erfasst und automatisch über eine Verbindung an eine Datenbank übermittelt. Das Arbeitsmittel 12 ist drahtlos mit der Datenbank verbunden. Die Verbindung des Arbeitsmittels 12 mit der Datenbank ist als Netzwerkverbindung ausgebildet. Die übermittelten Arbeitszeiten werden in der Datenbank gespeichert und abhängig von der Benutzeridentifikationskenngröße addiert, wodurch sich die benutzerspezifische Gesamtbearbeitungszeit ergibt. In dem Verfahrensschritt 44 erfolgt dabei eine Berücksichtigung eines Arbeitsmittelwechsels zur Berechnung der benutzerspezifischen Gesamtbearbeitungszeit. Die Berücksichtigung des Arbeitsmittelwechsels zur Berechnung der benutzerspezifischen Gesamtbearbeitungszeit erfolgt automatisch und selbsttätig.

In dem Verfahrensschritt 24 wird die benutzerspezifische Gesamtbearbeitungszeit mit einer vorgegebenen Gesamtbearbeitungszeit verglichen und anhand dieser vorgegebenen Gesamtbearbeitungszeit ausgewertet. In dem Verfahrensschritt 20, in dem die Benutzeridentität erfasst wird, wird die Benutzeridentität zum Abrufen der benutzerspezifischen Gesamtbearbeitungszeit ausgewertet. Die Auswertung der benutzerspezifischen Gesamtbearbeitungszeit erfolgt in Abhängigkeit von der erfassten Benutzeridentität. Liegt ein Wert der benutzerspezifischen Gesamtbearbeitungszeit unter einem Wert der vorgegebenen Gesamtbearbeitungszeit, wird das Arbeitsmittel 12 für einen Betrieb durch den Benutzer in einem Verfahrensschritt 66 freigeschaltet. Erreicht oder übersteigt die benutzerspezifische Gesamtbearbeitungszeit die vorgegebene Gesamtbearbeitungszeit, wird das Arbeitsmittel 12 in einem Verfahrensschritt 68 gesperrt. Das Arbeitsmittel 12 weist einen nicht dargestellten Aktuator zur mechanischen Sperrung in Abhängigkeit von der benutzerspezifischen Gesamtbearbeitungszeit auf. Es ist jedoch auch denkbar, dass das Arbeitsmittel 12 in Abhängigkeit von der benutzerspezifischen Gesamtbearbeitungszeit elektronisch gesperrt oder freigegeben wird.

Das Verfahren weist zumindest einen Verfahrensschritt 46 auf, in dem eine Bearbeitungsfunktion des Arbeitsmittels 12 in Abhängigkeit von der benutzerspezifischen Gesamtbearbeitungszeit veränderbar ist. Das Verfahren weist genau einen Verfahrensschritt 46 zur Veränderung der Bearbeitungsfunktion des Arbeitsmittels 12 auf. Es ist jedoch auch denkbar, dass das Verfahren mehrere, einem Fachmann als sinnvoll erscheinende Verfahrensschritte 46 zur Veränderung der Bearbeitungsfunktion des Arbeitsmittels 12 aufweist. Die Bearbeitungsfunktion ist als Leistung des Arbeitsmittels 12 ausgebildet. Es sind jedoch auch andere, einem Fachmann als sinnvoll erscheinende Ausgestaltungen der Bearbeitungsfunktion denkbar. In dem Verfahrensschritt 46 wird die Leistung des Arbeitsmittels 12 reduziert, sobald die benutzerspezifische Gesamtbearbeitungszeit einen Grenzwert erreicht oder überschreitet. Alternativ oder zusätzlich ist es denkbar, dass eine Quittierungsfunktion vorgesehen ist, die den Benutzer auf das Erreichen oder Überschreiten eines Grenzwerts und/oder der vorgegebenen Gesamtbearbeitungszeit hinweist und das Arbeitsmittel 12 sperrt, wobei eine Freigabe des Arbeitsmittels 12 durch eine aktive Bestätigung des Benutzers und/oder eines Vorgesetzten möglich ist.

Das Verfahren weist zumindest einen Verfahrensschritt 48 auf, in dem zumindest eine benutzungsspezifische Kenngröße erfasst wird und ein Grenzwert der benutzerspezifischen Gesamtbearbeitungszeit in Abhängigkeit von der zumindest einen benutzungsspezifischen Kenngröße angepasst wird. Das Verfahren weist genau einen Verfahrensschritt 48 zur Anpassung des Grenzwerts der benutzerspezifischen Gesamtbearbeitungszeit in Abhängigkeit von der benutzungsspezifischen Kenngröße auf. Es ist jedoch auch denkbar, dass das Verfahren mehrere, einem Fachmann als sinnvoll erscheinende Verfahrensschritte 48 zur Anpassung des Grenzwerts der benutzerspezifischen Gesamtbearbeitungszeit in Abhängigkeit von der benutzungsspezifischen Kenngröße aufweist. Die benutzungsspezifische Kenngröße ist als Vitalkennwert des Benutzers, als Umgebungstemperatur, Luftfeuchtigkeit und/oder auf eine andere, einem Fachmann als sinnvoll erscheinende Weise ausgebildet. In dem Verfahrensschritt 48 werden mehrere benutzungsspezifische Kenngrößen berücksichtigt. Bei einem Erreichen oder übersteigen zumindest einer der benutzungsspezifischen Kenngrößen kann auf eine erhöhte Belastung des Benutzers geschlossen und der Grenzwert der benutzerspezifischen Gesamtbearbeitungszeit reduziert werden.

Das Verfahren weist zumindest einen Verfahrensschritt 70 auf, in dem in Abhängigkeit von der benutzerspezifischen Gesamtbearbeitungszeit ein benutzerspezifischer Belastungskennwert ermittelt wird. Das Verfahren weist genau einen Verfahrensschritt 70 zur Ermittlung des benutzerspezifischen Belastungskennwerts auf. Es ist jedoch auch denkbar, dass das Verfahren mehrere, einem Fachmann als sinnvoll erscheinende Verfahrensschritte 70 zur Ermittlung des benutzerspezifischen Belastungskennwerts aufweist. Der benutzerspezifische Belastungskennwert ist als Schwingungsbelastung, Lärmbelastung, Strahlenbelastung und/oder auf eine andere, einem Fachmann als sinnvoll erscheinende Weise ausgebildet. In dem Verfahrensschritt 70 werden mehrere benutzerspezifische Belastungskennwerte berücksichtigt. Bei einem Erreichen oder Übersteigen zumindest eines der benutzerspezifischen Belastungskennwerte wird der Grenzwert der benutzerspezifischen Gesamtbearbeitungszeit reduziert.

Das Verfahren weist zumindest einen Verfahrensschritt 26 auf, in dem ein Betrieb des Arbeitsmittels 12 in Abhängigkeit von einem Verbindungsstatus des Arbeitsmittels 12 mit einem Netzwerk und/oder mit dem Ausrüstungsgegenstand 14 des Benutzers freigegeben wird. Das Verfahren weist genau einen Verfahrensschritt 26 zur Freigabe des Betriebs des Arbeitsmittels 12 in Abhängigkeit vom Verbindungsstatus auf. Es ist jedoch auch denkbar, dass das Verfahren mehrere, einem Fachmann als sinnvoll erscheinende Verfahrensschritte 26 zur Freigabe des Betriebs des Arbeitsmittels 12 in Abhängigkeit vom Verbindungsstatus aufweist. Der Betrieb des Arbeitsmittels 12 wird in dem Verfahrensschritt 66 freigegeben, wenn eine aktive und intakte Verbindung sowohl zum Netzwerk als auch zu den Ausrüstungsgegenständen 14 der persönlichen Schutzausrüstung 16 des Benutzers vorliegt. Ist eine der Verbindungen zum Austausch elektronischer Daten unterbrochen oder fehlerhaft, wird das Arbeitsmittel 12 im Verfahrensschritt 68, wie bereits beschrieben, gesperrt. Das Netzwerk umfasst eine Gebäudeinfrastruktur, einen Internetzugang, einen Server und/oder eine andere, einem Fachmann als sinnvoll erscheinende Struktur. Alternativ oder zusätzlich kann ein Verbindungsstatus des Arbeitsmittels 12 zu einem Buddy, einem Mobilgerät, insbesondere einem Smartphone, und/oder zu einer anderen, einem Fachmann als sinnvoll erscheinende Struktur oder Einheit überprüft werden. Über eine Verbindung des Arbeitsmittels 12 mit einer Gebäudeinfrastruktur kann beispielsweise ein Auslösewert eines in der Gebäudeinfrastruktur integrierten Rauchmelders automatisch kurzzeitig während der Bearbeitung mit dem Arbeitsmittel 12 erhöht werden, um einen Fehlalarm, der durch bei der Bearbeitung anfallenden Staub ausgelöst werden kann, zu vermeiden. Ferner kann eine Gas- und/oder Stromzufuhr in einem Arbeitsbereich automatisch abgeschaltet und/oder eine Luftabsaugung erhöht oder zugeschaltet werden.

Das Verfahren weist zumindest einen Verfahrensschritt 50 auf, in dem der Verbindungsstatus des Arbeitsmittels 12 mit dem Netzwerk und/oder mit den Ausrüstungsgegenständen 14 des Benutzers zumindest während eines Betriebs des zumindest einen Arbeitsmittels 12 intervallweise überprüft wird. Das Verfahren weist genau einen Verfahrensschritt 50 zur Überprüfung des Verbindungsstatus während des Betriebs des Arbeitsmittels 12 auf. Es ist jedoch auch denkbar, dass das Verfahren mehrere, einem Fachmann als sinnvoll erscheinende Verfahrensschritte 50 zur Überprüfung des Verbindungsstatus während des Betriebs des Arbeitsmittels 12 aufweist. Die Überprüfung des Verbindungsstatus erfolgt in Abhängigkeit von einer Zeit- und/oder Verschleißkenngröße. Wird während des Betriebs des Arbeitsmittels 12 eine Unterbrechung oder ein Fehler der Verbindungen zum Austausch elektronischer Daten erkannt, wird der Betrieb des Arbeitsmittels 12 in Verfahrensschritt 68 unterbrochen und gesperrt.

Das Verfahren weist zumindest einen Verfahrensschritt 52 auf, in dem eine Bearbeitungsfunktion des Arbeitsmittels 12 in Abhängigkeit von dem Verbindungsstatus veränderbar ist. Das Verfahren weist genau einen Verfahrensschritt 52 zur Veränderung der Bearbeitungsfunktion des Arbeitsmittels 12 auf. Es ist jedoch auch denkbar, dass das Verfahren mehrere, einem Fachmann als sinnvoll erscheinende Verfahrensschritte 52 zur Veränderung der Bearbeitungsfunktion des Arbeitsmittels 52 aufweist. Die Bearbeitungsfunktion ist als Leistung des Arbeitsmittels 12 ausgebildet. Es sind jedoch auch andere, einem Fachmann als sinnvoll erscheinende Ausgestaltungen der Bearbeitungsfunktion denkbar. In dem Verfahrensschritt 52 wird die Leistung des Arbeitsmittels 12 reduziert, sobald der Verbindungsstatus als unterbrochen oder fehlerhaft erkannt wird.

Das Verfahren weist zumindest einen Verfahrensschritt 54 auf, in dem der Betrieb des Arbeitsmittels 12 unabhängig von dem Verbindungsstatus aktiv von dem Benutzer freigegeben wird. Das Verfahren weist genau einen Verfahrensschritt 54 zur Freigabe des Betriebs des Arbeitsmittels 12 unabhängig von dem Verbindungsstatus durch den Benutzer auf. Es ist jedoch auch denkbar, dass das Verfahren mehrere, einem Fachmann als sinnvoll erscheinende Verfahrensschritte 54 zur Freigabe des Betriebs des Arbeitsmittels 12 unabhängig von dem Verbindungsstatus durch den Benutzer aufweist. Der Benutzer wird in dem Verfahrensschritt 54 auf die fehlende Verbindung des Arbeitsmittels 12 zu dem Netzwerk und/oder den Ausrüstungsgegenständen 14 hingewiesen und kann den Hinweis quittieren und den Betrieb des Arbeitsmittels 12 anschließend aktiv durch einen Eingabebefehl freigeben. Das Arbeitsmittel 12 weist ein Ein- und Ausgabeelement 72 zur Ausgabe des Hinweises an den Benutzer und zur Eingabe des Eingabebefehls durch den Benutzer auf. Das Ein- und Ausgabeelement 72 ist als Touchscreen ausgebildet. Es sind jedoch auch andere, einem Fachmann als sinnvoll erscheinende Ausgestaltungen des Ein- und Ausgabeelements 72 denkbar.

Das Verfahren weist den Verfahrensschritt 20 auf, in dem die Benutzeridentität erfasst wird. In dem Verfahrensschritt 20 wird die erfasste Benutzeridentität zudem zu einer Freigabe des Betriebs des Arbeitsmittels 12 ausgewertet. Anhand der erfassten Benutzeridentität werden in einem weiteren Verfahrensschritt 74 zusätzliche Benutzer- und/oder Benutzungsinformationen zur Verfügung gestellt. Die zusätzlichen Benutzerinformationen sind gebildet von Informationen zu einer Qualifikation, einer Berechtigung und/oder einem Ausbildungsstand des Benutzers oder auf eine andere, einem Fachmann als sinnvoll erscheinende Weise. Die zusätzlichen Benutzungsinformationen sind gebildet von Informationen zu benötigten Ausrüstungsgegenständen 14 oder auf eine andere, einem Fachmann als sinnvoll erscheinende Weise. Das Arbeitsmittel 12 kann in Abhängigkeit von den zusätzlichen Benutzer- und/oder Benutzungsinformationen freigegeben werden. So kann das Arbeitsmittel 12 nur für Benutzer mit einer bestimmten Berechtigung und/oder Qualifikation und/oder bei einer Vollständigkeit der persönlichen Schutzausrüstung 16 des Benutzers freigegeben werden.

Das Verfahren weist zudem zumindest einen weiteren Verfahrensschritt 76 auf, in dem zumindest eine Kenngröße, wie beispielsweise ein Einsatzort, eine Entfernung der Ausrüstungsgegenstände zum Arbeitsmittel 12, einer Platzierung der Ausrüstungsgegenstände 14 am Benutzer, Vitalfunktionen des Benutzers, umgebungsspezifische Anforderungen an die Ausrüstungsgegenstände 14, eine Funktion oder ein Abnutzungszustand der Ausrüstungsgegenstände 14, eine Funktion, eine Lastkenngröße oder ein Abnutzungszustand des Arbeitsmittels 12 oder eine andere, einem Fachmann als sinnvoll erscheinende Ausgestaltung der Kenngröße, erfasst und zu einer Freigabe des Betriebs des Arbeitsmittels 12 ausgewertet wird. So kann beispielsweise bei Dunkelheit oder bei trübem Wetter zumindest ein heller und/oder reflektierend ausgebildeter Ausrüstungsgegenstand 14 zur Freigabe des Betriebs des Arbeitsmittels 12 vorgegeben sein. Eine Erkennung der umgebungsspezifischen Information, wie Dunkelheit und/oder schlechte Sicht, kann von dem Benutzer oder einer Zentralstelle eingebbar, mittels eines Sensors an dem Arbeitsmittel 12 erfassbar und/oder über eine Netzwerkverbindung, insbesondere von einem Wetterdienst, abrufbar ausgebildet sein. Alternativ oder zusätzlich kann in Abhängigkeit vom Einsatzort und/oder einer Einsatzuhrzeit der Betrieb des Arbeitsmittels 12 gesperrt oder eingeschränkt werden, um beispielsweise eine Einhaltung von Mittags- und Nachtruhezeiten zu gewährleisten und/oder um einen Einsatz von für den Einsatzort ungeeigneter Arbeitsmittel 12 zu vermeiden. Es sind auch andere, einem Fachmann als sinnvoll erscheinende Ausgestaltungen und Ausführungsformen denkbar.

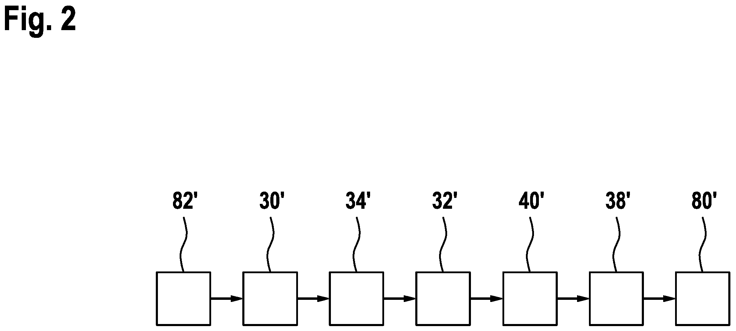

In Figur 2 ist ein alternatives Ausführungsbeispiel eines erfindungsgemäßen Verfahrens gezeigt. Die nachfolgende Beschreibung und die Zeichnung beschränken sich im Wesentlichen auf die Unterschiede zwischen den Ausführungsbeispielen der Verfahren, wobei bezüglich gleich bezeichneter Verfahrensschritte und Bauteile, insbesondere in Bezug auf Verfahrensschritte und Bauteile mit gleichen Bezugszeichen, grundsätzlich auch auf die Zeichnungen und/oder die Beschreibung des anderen Ausführungsbeispiels, insbesondere der Figuren 1 und 3 bis 5, verwiesen werden kann. Zur Unterscheidung der Ausführungsbeispiele ist den Bezugszeichen des alternativen Ausführungsbeispiels in der Figur 2 ein Apostroph nachgestellt.

In Figur 2 ist ein Ablaufdiagramm eines alternativen Verfahrens zum Betrieb des bereits beschriebenen Systems 10 mit dem als tragbare Werkzeugmaschine ausgebildeten Arbeitsmittel 12 und den Ausrüstungsgegenständen 14 der persönlichen Schutzausrüstung 16 eines Benutzers dargestellt. Das System 10 entspricht dem in den Figuren 1 sowie 3 bis 5 bereits beschriebenen System 10 und umfasst die Elektronikvorrichtung 60 zu einer digitalen Gruppierung von Verbindungsdaten von zumindest zwei Ausrüstungsgegenständen 14 vor einer Verbindung zwischen dem Arbeitsmittel 12 und zumindest einem der zumindest zwei Ausrüstungsgegenstände 14. Das alternative Verfahren umfasst einen Verfahrensschritt 82', in dem eine Verbindung zum Austausch elektronischer Daten zwischen dem Arbeitsmittel 12 und dem Datenmaster 78 hergestellt wird. Der Datenmaster 78 ist dem Benutzer zugeordnet. In dem Datenmaster 78 ist eine Benutzeridentifikationskenngröße des Benutzers fest hinterlegt. Die Verbindung zwischen dem Arbeitsmittel 12 und dem Datenmaster 78 wird durch einen Bedienbefehl des Benutzers hergestellt. Es ist jedoch auch denkbar, dass die Verbindung zwischen dem Arbeitsmittel 12 und dem Datenmaster 78, wie bereits beschrieben, automatisch und selbsttätig hergestellt wird. Der Datenmaster 78 ist von einem der Ausrüstungsgegenstände 14 der persönlichen Schutzausrüstung 16 des Benutzers gebildet. Es sind jedoch auch andere, einem Fachmann als sinnvoll erscheinende Ausgestaltungen des Datenmasters 78, wie beispielsweise als Smartphone oder Smartband oder virtuell als Cloud oder Servernetzwerk, denkbar.

Das alternative Verfahren umfasst zumindest einen Verfahrensschritt 30', in dem Verbindungsdaten von zumindest zwei der Ausrüstungsgegenstände 12 vor einer Verbindung der zumindest zwei Ausrüstungsgegenstände 14 mit dem Arbeitsmittel 12 digital gruppiert werden. Das alternative Verfahren weist genau einen Verfahrensschritt 30' zur Gruppierung der zumindest zwei Ausrüstungsgegenstände 14 auf. Es ist jedoch auch denkbar, dass das Verfahren mehrere, einem Fachmann als sinnvoll erscheinende Verfahrensschritte 30' zur Gruppierung der zumindest zwei Ausrüstungsgegenstände 14 aufweist. Die Verbindungsdaten der Ausrüstungsgegenstände 14 werden in dem Verfahrensschritt 30' in Abhängigkeit von einem Arbeitsauftrag digital gruppiert. In Abhängigkeit von dem Arbeitsauftrag wird festgelegt, welche Ausrüstungsgegenstände 14 der persönlichen Schutzausrüstung 16 des Benutzers für die Durchführung des Arbeitsauftrags notwendig sind. Diese benötigten Ausrüstungsgegenstände 14 werden dann in dem Verfahrensschritt 30' bei der digitalen Gruppierung berücksichtigt und zusammengefasst. Die Verbindungsdaten der Ausrüstungsgegenstände 14 werden in dem Verfahrensschritt 30' in Abhängigkeit von einer Kenngröße des Arbeitsmittels 12 digital gruppiert. In Abhängigkeit von der Kenngröße des Arbeitsmittels 12 wird festgelegt, welche Ausrüstungsgegenstände 14 der persönlichen Schutzausrüstung 16 des Benutzers für eine Benutzung des Arbeitsmittels notwendig sind. Diese benötigten Ausrüstungsgegenstände 14 werden dann in dem Verfahrensschritt 30' bei der digitalen Gruppierung berücksichtigt und zusammengefasst. Die Kenngröße des Arbeitsmittels 12 ist von einer Klasse, zu der das Arbeitsmittel 12 gehört, von einer Leistung des Arbeitsmittels 12 und/oder von besonderen Schutz- und/oder Sicherheitsbestimmungen des Arbeitsmittels 12 gebildet. Die Verbindungsdaten der Ausrüstungsgegenstände 14 werden in dem Verfahrensschritt 30' in Abhängigkeit von einer Benutzerkenngröße digital gruppiert. In Abhängigkeit von der Benutzerkenngröße wird festgelegt, welche Ausrüstungsgegenstände 14 der persönlichen Schutzausrüstung 16 des Benutzers für den Benutzer bei einer Ausführung einer Arbeit notwendig sind. Diese benötigten Ausrüstungsgegenstände 14 werden dann in dem Verfahrensschritt 30' bei der digitalen Gruppierung berücksichtigt und zusammengefasst. Die Benutzerkenngröße ist von einer Qualifikation, einer Berechtigung, einem Ausbildungsstand und/oder einem physischen Zustand des Benutzers gebildet.

Das alternative Verfahren umfasst zumindest einen Verfahrensschritt 34', in dem die digital gruppierten Verbindungsdaten der Ausrüstungsgegenstände 14 in die Speichereinheit 36 eines der Ausrüstungsgegenstände 14 gespeichert werden. Die digital gruppierten Verbindungsdaten der Ausrüstungsgegenstände 14 werden in die Speichereinheit 36 des als Ausrüstungsgegenstand 14 ausgebildeten Datenmasters 78 gespeichert. Das alternative Verfahren weist genau einen Verfahrensschritt 34' zur Speicherung der digital gruppierten Verbindungsdaten auf. Es ist jedoch auch denkbar, dass das alternative Verfahren mehrere, einem Fachmann als sinnvoll erscheinende Verfahrensschritte 34' zur Speicherung der digital gruppierten Verbindungsdaten aufweist. Das alternative Verfahren weist zumindest einen Verfahrensschritt 32' auf, in dem die digital gruppierten Verbindungsdaten der Ausrüstungsgegenstände 14 zur Herstellung einer Verbindung zwischen dem Arbeitsmittel 12 und zumindest einem der Ausrüstungsgegenstände 14 abgerufen werden. In dem Verfahrensschritt 32' werden die gruppierten Verbindungsdaten der Ausrüstungsgegenstände 14 zur Herstellung der Verbindung zwischen dem Arbeitsmittel 12 und allen Ausrüstungsgegenständen 14, zu denen die digital gruppierten Verbindungsdaten gespeichert sind, abgerufen. Das alternative Verfahren weist genau einen Verfahrensschritt 32' zum Abrufen der digital gruppierten Verbindungsdaten der Ausrüstungsgegenstände 14 auf. Es ist jedoch auch denkbar, dass das alternative Verfahren mehrere, einem Fachmann als sinnvoll erscheinende Verfahrensschritte 32' zum Abrufen der digital gruppierten Verbindungsdaten der Ausrüstungsgegenstände 14 aufweist. Die digital gruppierten Verbindungsdaten der Ausrüstungsgegenstände 14 werden durch das Arbeitsmittel 12 von dem Datenmaster 78 abgerufen. Die digital gruppierten Verbindungsdaten der Ausrüstungsgegenstände 14 werden mittels einer drahtlosen Verbindung durch das Arbeitsmittel 12 von dem Datenmaster 78 abgerufen. Das alternative Verfahren umfasst zumindest einen Verfahrensschritt 40', in dem die Verbindung zum Austausch elektronischer Daten zwischen dem Arbeitsmittel 12 und zumindest einem der Ausrüstungsgegenstände 14 in Abhängigkeit von den digital gruppierten Verbindungsdaten selbsttätig hergestellt wird. Das alternative Verfahren weist genau einen Verfahrensschritt 40' zur selbsttätigen Herstellung der Verbindung zwischen dem Arbeitsmittel 12 und zumindest einem der Ausrüstungsgegenstände 14 auf. Es ist jedoch auch denkbar, dass das alternative Verfahren mehrere, einem Fachmann als sinnvoll erscheinende Verfahrensschritte 40 zur selbsttätigen Herstellung der Verbindung zwischen dem Arbeitsmittel 12 und zumindest einem der Ausrüstungsgegenstände 14 aufweist. In dem Verfahrensschritt 40' wird die Verbindung zwischen dem Arbeitsmittel 12 und allen Ausrüstungsgegenständen 14, zu denen die digital gruppierten Verbindungsdaten gespeichert sind, selbsttätig hergestellt. Die Verbindungsdaten der Ausrüstungsgegenstände 14 sind von einer Benutzeridentifikationskenngröße des Benutzers gebildet, wobei die Benutzeridentifikationskenngröße in den Ausrüstungsgegenständen 14 jeweils fest hinterlegt ist. Es sind jedoch auch andere, einem Fachmann als sinnvoll erscheinende Ausgestaltungen der Verbindungsdaten denkbar. Die Verbindung zwischen dem Arbeitsmittel 12 und den Ausrüstungsgegenständen 14 wird in dem Verfahrensschritt 40', wie bereits im Verfahrensschritt 18 beschrieben, mittels eines Challenge-Response-Verfahrens in Abhängigkeit von der Benutzeridentifikationskenngröße hergestellt. Es sind jedoch auch andere, einem Fachmann als sinnvoll erscheinende Ausgestaltungen der selbsttätigen Herstellung der Verbindung denkbar. Die Verbindung zwischen dem Arbeitsmittel 12 und den Ausrüstungsgegenständen 14 wird in dem zumindest einen Verfahrensschritt 40' in Abhängigkeit von den digital gruppierten Verbindungsdaten verschlüsselt.

Das alternative Verfahren weist zumindest einen Verfahrensschritt 38' auf, in dem die digital gruppierten Verbindungsdaten automatisch aktualisiert werden. Das alternative Verfahren weist genau einen Verfahrensschritt 38' zum automatischen Aktualisieren der digital gruppierten Verbindungsdaten auf. Es ist jedoch auch denkbar, dass das alternative Verfahren mehrere, einem Fachmann als sinnvoll erscheinende Verfahrensschritte 38 zum automatischen Aktualisieren der digital gruppierten Verbindungsdaten aufweist. Die Verbindungsdaten werden mittels einer drahtlosen Verbindung der Ausrüstungsgegenstände 14 mit einem Netzwerk automatisch aktualisiert. Die Verbindungsdaten werden intervallweise automatisch aktualisiert. Die Verbindungsdaten werden in einem unbenutzten Zustand der Ausrüstungsgegenstände 14 automatisch aktualisiert. Es sind jedoch auch andere, einem Fachmann als sinnvoll erscheinende Ausgestaltungen der Aktualisierung der Verbindungsdaten denkbar.

Das alternative Verfahren weist zumindest einen weiteren Verfahrensschritt 80' zur Freigabe eines Betriebs des Arbeitsmittels auf. Das alternative Verfahren weist mehrere weitere Verfahrensschritte zur Freigabe des Betriebs des Arbeitsmittels auf, die zumindest teilweise den bereits beschriebenen Verfahrensschritten 24, 26, 76 entsprechen und in Figur 2 nicht näher dargestellt sind.

## Patentansprüche

1. Verfahren zu einem Betrieb eines Systems (10) mit zumindest einem Arbeitsmittel (12), insbesondere einer tragbaren Werkzeugmaschine, und zumindest zwei Ausrüstungsgegenständen (14), insbesondere einer persönlichen Schutzausrüstung (16), eines Benutzers, **dadurch gekennzeichnet, dass** zumindest einer der Ausrüstungsgegenstände (14) als Datenmaster (78) agiert, der zu einer Speicherung und digitalen Gruppierung von, insbesondere elektronischen, Daten von den zumindest zwei Ausrüstungsgegenständen (14) vorgesehen ist, wobei die digitale Gruppierung ein digitales Zusammenfassen von Verbindungsdaten der zumindest zwei Ausrüstungsgegenstände (14) darstellt, wobei die zumindest zwei Ausrüstungsgegenstände (14) zumindest teilweise gemeinsam als eine Gruppe und/oder Familie benutzbar und/oder betreibbar sind.

2. Verfahren nach Anspruch 1, **gekennzeichnet durch** zumindest einen Verfahrensschritt (30'), in dem Verbindungsdaten der zumindest zwei Ausrüstungsgegenstände (14) vor einer Verbindung, welche zu einem Austausch elektronischer Daten zwischen dem zumindest einen Arbeitsmittel (12) und zumindest einem der Ausrüstungsgegenstände (14) vorgesehen ist, mit dem zumindest einen Arbeitsmittel (12) digital gruppiert werden.

3. Verfahren nach Anspruch 1 oder 2, **gekennzeichnet durch** zumindest einen Verfahrensschritt (32'), in dem die gruppierten Verbindungsdaten der zumindest zwei Ausrüstungsgegenstände (14) zu einer Herstellung einer Verbindung zwischen dem zumindest einen Arbeitsmittel (12) und zumindest einem der Ausrüstungsgegenstände (14) abgerufen werden.

4. Verfahren nach einem der vorhergehenden Ansprüche, **gekennzeichnet durch** zumindest einen Verfahrensschritt (34'), in dem die digital gruppierten Verbindungsdaten der zumindest zwei Ausrüstungsgegenstände (14) in eine Speicher-einheit (36) eines Ausrüstungsgegenstands (14) gespeichert werden.

5. Verfahren nach einem der vorhergehenden Ansprüche, **gekennzeichnet durch** zumindest einen Verfahrensschritt (38'), in dem die digital gruppierten Verbindungsdaten automatisch aktualisiert werden.

6. Verfahren nach einem der vorhergehenden Ansprüche, **gekennzeichnet durch** zumindest einen Verfahrensschritt (40'), in dem eine Verbindung zum Austausch elektronischer Daten zwischen dem zumindest einen Arbeitsmittel (12) und zumindest einem der Ausrüstungsgegenstände (14) in Abhängigkeit von den digital gruppierten Verbindungsdaten selbsttätig hergestellt wird.

7. Verfahren nach Anspruch 6, **dadurch gekennzeichnet, dass** die Verbindung zwischen dem zumindest einen Arbeitsmittel (12) und dem zumindest einen Ausrüstungsgegenstand (14) in dem zumindest einen Verfahrensschritt (40') in Abhängigkeit von den digital gruppierten Verbindungsdaten verschlüsselt wird.

8. Verfahren nach einem der vorhergehenden Ansprüche, **dadurch gekennzeichnet, dass** die Verbindungsdaten der zumindest zwei Ausrüstungsgegenstände (14) in Abhängigkeit von einem Arbeitsauftrag digital gruppiert werden.

9. Verfahren nach einem der vorhergehenden Ansprüche, **dadurch gekennzeichnet, dass** die Verbindungsdaten der zumindest zwei Ausrüstungsgegenstände (14) in Abhängigkeit von einer Kenngröße des zumindest einen Arbeitsmittels (12) digital gruppiert werden.

10. Verfahren nach einem der vorhergehenden Ansprüche, **dadurch gekennzeichnet, dass** die Verbindungsdaten der zumindest zwei Ausrüstungsgegenstände (14) in Abhängigkeit von einer Benutzerkenngröße digital gruppiert werden.

11. System zur Durchführung eines Verfahrens nach einem der vorhergehenden Ansprüche, mit zumindest einem Arbeitsmittel (12), insbesondere einer tragbaren Werkzeugmaschine, und mit zumindest zwei Ausrüstungsgegenständen (14), insbesondere einer persönlichen Schutzausrüstung (16), eines Benutzers, **gekennzeichnet durch** zumindest eine Elektronikvorrichtung (42) zumindest zu einer digitalen Gruppierung von Verbindungsdaten der zumindest zwei Ausrüstungsgegenstände (14) vor einer Verbindung zwischen dem zumindest einen Arbeitsmittel (12) und zumindest einem der zumindest zwei Ausrüstungsgegen-stände (14).

## Claims

1. Method for operating a system (10) having at least one tool (12), in particular a portable machine tool, and at least two items of equipment (14), in particular personal protective equipment (16), of a user, **characterized in that** at least one of the items of equipment (14) acts as a data master (78) provided for storing and digitally grouping, in particular electronic, data from the at least two items of equipment (14), wherein the digital grouping is a digital combining of connection data of the at least two items of equipment (14), wherein the at least two items of equipment (14) are at least sometimes able to be used and/or able to be operated together as a group and/or family.

2. Method according to Claim 1, **characterized by** at least one method step (30') in which connection data of the at least two items of equipment (14) are digitally grouped with the at least one tool (12) prior to a connection provided for the purpose of interchanging electronic data between the at least one tool (12) and at least one of the items of equipment (14).

3. Method according to Claim 1 or 2, **characterized by** at least one method step (32') in which the grouped connection data of the at least two items of equipment (14) are retrieved for the purpose of making a connection between the at least one tool (12) and at least one of the items of equipment (14).

4. Method according to one of the preceding claims, **characterized by** at least one method step (34') in which the digitally grouped connection data of the at least two items of equipment (14) are stored in a memory unit (36) of an item of equipment (14).

5. Method according to one of the preceding claims, **characterized by** at least one method step (38') in which the digitally grouped connection data are automatically updated.

6. Method according to one of the preceding claims, **characterized by** at least one method step (40') in which a connection for the purpose of interchanging electronic data between the at least one tool (12) and at least one of the items of equipment (14) is made automatically on the basis of the digitally grouped connection data.

7. Method according to Claim 6, **characterized in that** the connection between the at least one tool (12) and the at least one item of equipment (14) is encrypted in the at least one method step (40') on the basis of the digitally grouped connection data.

8. Method according to one of the preceding claims, **characterized in that** the connection data of the at least two items of equipment (14) are digitally grouped on the basis of a work order.

9. Method according to one of the preceding claims, **characterized in that** the connection data of the at least two items of equipment (14) are digitally grouped on the basis of a characteristic quantity of the at least one tool (12).

10. Method according to one of the preceding claims, **characterized in that** the connection data of the at least two items of equipment (14) are digitally grouped on the basis of a user characteristic quantity.

11. System for carrying out a method according to one of the preceding claims, having at least one tool (12), in particular a portable machine tool, and having at least two items of equipment (14), in particular personal protective equipment (16), of a user, **characterized by** at least one electronic apparatus (42) at least for digitally grouping connection data of the at least two items of equipment (14) prior to a connection between the at least one tool (12) and at least one of the at least two items of equipment (14).

## Revendications

1. Procédé permettant de faire fonctionner un système (10) comprenant au moins un outil de travail (12), en particulier une machine-outil portable, et au moins deux pièces d'équipement (14), en particulier un équipement de protection individuelle (16), d'un utilisateur,
**caractérisé en ce qu'**au moins l'une des pièces d'équipement (14) sert de maître de données (78) qui est prévu pour un stockage et regroupement numérique de données, en particulier électroniques, des au moins deux pièces d'équipement (14), le regroupement numérique étant un rassemblement numérique de données de communication des au moins deux pièces d'équipement (14), les au moins deux pièces d'équipement (14) pouvant au moins partiellement être utilisées et/ou exploitées sous forme de groupe et/ou de famille.

2. Procédé selon la revendication 1, **caractérisé par** au moins une étape de procédé (30') dans laquelle des données de communication des au moins deux pièces d'équipement (14) sont regroupées de façon numérique avec ledit au moins un outil de travail (12) avant une communication qui est prévue pour un échange de données électroniques entre ledit au moins un outil de travail (12) et au moins l'une des pièces d'équipement (14).

3. Procédé selon la revendication 1 ou 2, **caractérisé par** au moins une étape de procédé (32') dans laquelle les données de communication regroupées des au moins deux pièces d'équipement (14) sont extraites pour établir une communication entre ledit au moins un outil de travail (12) et au moins l'une des pièces d'équipement (14).

4. Procédé selon l'une quelconque des revendications précédentes, **caractérisé par** au moins une étape de procédé (34') dans laquelle les données de communication regroupées de façon numérique des au moins deux pièces d'équipement (14) sont stockées dans une unité de mémoire (36) d'une pièce d'équipement (14) .

5. Procédé selon l'une quelconque des revendications précédentes, **caractérisé par** au moins une étape de procédé (38') dans laquelle les données de communication regroupées de façon numérique sont mises à jour automatiquement.

6. Procédé selon l'une quelconque des revendications précédentes, **caractérisé par** au moins une étape de procédé (40') dans laquelle une communication pour l'échange de données électroniques entre ledit au moins un outil de travail (12) et au moins l'une des pièces d'équipement (14) est établie de façon autonome en fonction des données de communication regroupées de façon numérique.

7. Procédé selon la revendication 6, **caractérisé en ce que** la communication entre ledit au moins un outil de travail (12) et ladite au moins une pièce d'équipement (14) dans ladite au moins une étape de procédé (40') est chiffrée en fonction des données de communication regroupées de façon numérique.

8. Procédé selon l'une quelconque des revendications précédentes, **caractérisé en ce que** les données de communication des au moins deux pièces d'équipement (14) sont regroupées de façon numérique en fonction d'un ordre de travail.

9. Procédé selon l'une quelconque des revendications précédentes, **caractérisé en ce que** les données de communication des au moins deux pièces d'équipement (14) sont regroupées de façon numérique en fonction d'une grandeur caractéristique de l'au moins un outil de travail (12).

10. Procédé selon l'une quelconque des revendications précédentes, **caractérisé en ce que** les données de communication des au moins deux pièces d'équipement (14) sont regroupées de façon numérique en fonction d'une grandeur caractéristique utilisateur.

11. Système permettant d'effectuer un procédé selon l'une quelconque des revendications précédentes, comprenant au moins un outil de travail (12), en particulier une machine-outil portable, et comprenant au moins deux pièces d'équipement (14), en particulier un équipement de protection individuelle (16), d'un utilisateur, **caractérisé par** au moins un dispositif électronique (42) destiné au moins à un regroupement numérique de données de communication des au moins deux pièces d'équipement (14) avant une communication entre ledit au moins un outil de travail (12) et au moins l'une des deux pièces d'équipement (14).
